# EUROPÄISCHE PATENTANMELDUNG

(11) **EP 1 155 809 A2**
(43) Veröffentlichungstag der Anmeldung: **21.11.2001**
(21) Anmeldenummer: 00114485.6
(22) Anmeldetag: 06.07.2000
(51) Int. Cl.: B29C 55/14, B32B 31/16

(54) **Verfahren und Anlage zum Herstellen einer wasserdamphfdurchlässigen Laminatbahn**

(30) Priorität: 16.05.2000 DE 10023615
(71) Anmelder: Reifenhäuser GmbH & Co. Maschinenfabrik, 53839 Troisdorf (DE)
(72) Erfinder: Sommer, Sebastian, 53844 Troisdorf (DE)
(74) Vertreter: Masch, Karl Gerhard, Dr.

(57) **Zusammenfassung**

Bei einem Verfahren zum Herstellen einer wasserdampfdurchlässigen Laminatbahn werden eine Folienbahn aus mit einem Füllstoff versetztem thermoplastischen Kunststoff und eine Nonwoven-Vliesbahn aus Kunststoff-Filamenten und/oder Kunststoff-Fasern miteinander in Verbund gebracht. Die so gebildete Verbundbahn wird in Längs- und Querrichtung zur Laminatbahn gereckt. Dabei gelangt man mit verhältnismäßig einfachen technischen Mitteln zu einer Verbundbahn mit homogenen Eigenschaften und hoher Luftdurchlässigkeit, wenn die Verbundbahn zunächst um mehr als 200 % in Längsrichtung und anschließend um nicht mehr als 50 % auch in Querrichtung gereckt wird. Eine Anlage zur Durchführung dieses Verfahrens arbeitet mit einem Längsreckwerk und einem Querreckwerk (1) .

## Beschreibung

Die Erfindung betrifft einerseits ein Verfahren zum Herstellen einer wasserdampfdurchlässigen Laminatbahn, wobei eine Folienbahn aus mit einem Füllstoff versetztem thermoplastischen Kunststoff und eine Nonwoven-Vliesbahn aus Kunststoff-Filamenten und/oder Kunststoff-Fasern miteinander in Verbund gebracht werden und die so gebildete Verbundbahn in Längs- und Querrichtung zur Laminatbahn gereckt wird, und andererseits eine Anlage zur Durchführung dieses Verfahrens, mit einem Längsreckwerk und einem Querreckwerk.

Bei einem bekannten Verfahren der genannten Art (PATENT ABSTRACTS OF JAPAN, vol. 015, no. 039 (M-1075), 30 Januar 1991 & JP 02 276636 A (SUMITOMO CHEM CO LTD), 13. November 1990) wird die Verbundbahn jeweils um 10 bis 200 % in Längs- und Querrichtung gereckt. Im Rahmen dieser bekannten Maßnahmen kann man zwar bezüglich Homogenität und Wasserdampfdurchlässigkeit zu befriedigenden Laminatbahnen gelangen. Bei Anwendung niedriger Reckraten lassen jedoch Homogenität und Wasserdampfdurchlässigkeit der Lamitbahn zu wünschen übrig, bei Anwendung hoher Reckraten ist der erforderliche anlagentechnische Aufwand hoch.

Der Erfindung liegt die Aufgabe zugrunde, anzugeben, wie man im Rahmen der eingangs genannten Maßnahmen mit einem niedrigen anlagentechnischen Aufwand zu homogenen Laminatbahnen hoher Wasserdampfdurchlässigkeit gelangt.

In verfahrensmäßiger Hinsicht besteht die Erfindung darin, dass die Verbundbahn zunächst um mehr als 200 % in Längsrichtung und anschließend um nicht mehr als 50 % auch in Querrichtung gereckt wird.

Die Erfindung geht hierbei von der überraschenden Erkenntnis aus, dass von einer bestimmten Längsreckrate an nur noch eine geringe Querreckrate erforderlich ist, um eine beachtliche Steigerung der Wasserdampfdurchlässigkeit bei zugleich homogenen Bahneigenschaften zu erzielen. Die geringen Querreckraten lassen sich in anlagentechnischer Hinsicht mit verhältnismäßig einfachen Mitteln verwirklichen.

Für die weitere Ausgestaltung bestehen im Rahmen der Erfindung mehrere Möglichkeiten. So wird nach einer bevorzugten Ausführungsform mit einer Folienbahn auf Basis Polyethylen, insbesondere Propylen oder Polyethylen, gearbeitet. Die Folienbahn auf Basis Propylen oder Polyethylen kann dabei vorteilhafterweise einen Anteil Ethylen-Vinylalkohol-Copolymer und/oder Ethylen-Propylen-Dien-Mischpolymerisat aufweisen. Zweckmäßigerweise enthält die Folienbahn den für die Erzeugung der Poren beim Recken erforderlichen "starren Füllstoff" bezogen auf den thermoplastischen Kunststoff in Mengen von 30 bis 70 Gew.-%, insbesondere 30 bis 60 Gew.-%. Besonders geeignet als Füllstoff ist Kalziumkarbonat in einer Korngröße von 1 bis 10 *µ*m. Die Ausführung der Nonwoven-Vliesbahn ist im Rahmen der Erfindung grundsätzlich beliebig, da es sich nur um das Substrat für die Folienbahn handelt. Zweckmäßigerweise wird die Verbundbahn bei erhöhter Temperatur, vorzugsweise von 80 bis 150 °C in Längs- und Querrichtung gereckt. Besonders gute Ergebnisse werden erzielt, wenn die Verbundbahn um 250 bis 450 % in Längsrichtung und um 20 bis 30 % in Querrichtung gereckt wird.

Gegenstand der Erfindung ist auch eine Anlage zur Durchführung des beschriebenen Verfahrens, mit einem Längsreckwerk und einem Querreckwerk. Eine erste Ausführungsform ist hier dadurch gekennzeichnet, dass das Querreckwerk aus einem Gatter von Bananen-Breitstreckwalzen ggf. mit einem unteren und/oder oberen, über die äußeren Breitstreckwalzen endlos umlaufenden elastischen Band besteht. Eine zweite Ausführungsform ist dadurch gekennzeichnet, dass das Querreckwerk aus einem um die beiden unteren Walzen zweier Hauptwalzenpaare endlos umlaufenden elastischen Band mit einer gegenüber der Verbundbahn hohen Steifigkeit und zwischen den Hauptwalzenpaaren angeordneten, eine nach außen gerichtete Kraft auf das Band ausübenden, schräg angestellten Nebenwalzenpaaren besteht. Zur Erhöhung des Kraftschlusses zwischen Verbundbahn und elastischem Band empfiehlt es sich, das elastische Band luftdurchlässig auszuführen und zwischen den beiden unteren Walzen der beiden Hauptwalzenpaare eine an ein Sauggebläse angeschlossene Vakuumwanne anzuordnen.

Im folgenden wird die Erfindung anhand von Zeichnungen und Beispielen näher erläutert. Es zeigen
- Fig. 1: ein Querreckwerk einer Anlage zum Herstellen einer wasserdampfdurchlässigen Laminatbahn und
- Fig. 2: eine andere Ausführungsform eines Querreckwerkes sowie
- Fig. 3: eine Aufsicht auf den Gegenstand der Fig. 2.

Die in den Figuren dargestellten Querreckwerke sind in einer Anlage zum Herstellen einer wasserdampfdurchlässigen Laminatbahn eingesetzt. Dabei wird eine Folienbahn aus mit einem Füllstoff versetztem thermoplastischen Kunststoff und eine Nonwoven-Vliesbahn aus Kunststoff-Filamenten und/oder Kunststoff-Fasern miteinander in Verbund gebracht. Dieser Verbund kann aus der Extrusions- bzw. Spinnwärme heraus, durch Einsatz sog. Bondingwalzen und/oder Verwendung geeigneter Klebemittel hergestellt werden. Die so gebildete Verbundbahn wird in Längs- und Querrichtung zur Laminatbahn gereckt, wobei zunächst in einem Längsreckwerk in Längsrichtung und anschließend in einem Querreckwerk 1 in Querrichtung gereckt wird. Beim Querrecken kann in geringem Umfang auch eine weitere Längsreckung erfolgen.

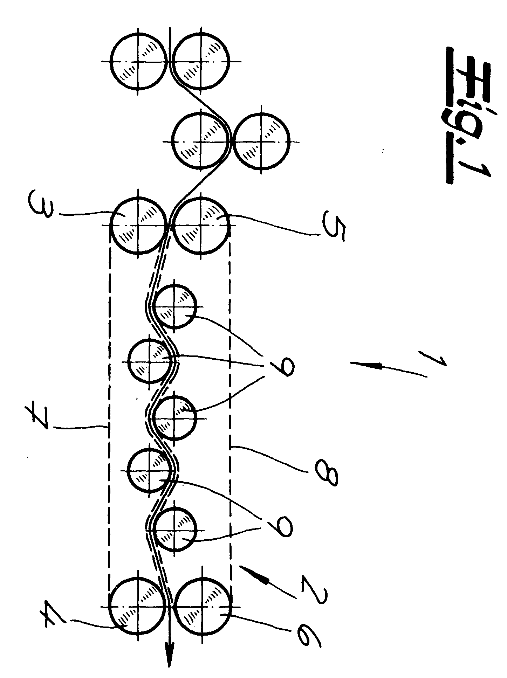

Bei der Anlage gemäß Fig. 1 besteht das Querreckwerk 1 aus einem Gatter von Bananen-Breitstreckwalzen 2 mit einem unteren und einem oberen, über die jeweils äußeren Breitstreckwalzen 3, 4 bzw. 5, 6 endlos umlaufenden elastischen Band 7 bzw. 8. Zwischen den jeweils äußeren Breitstreckwalzen 3, 4 bzw. 5, 6 sind in der Höhe zueinander versetzt weitere Bananen-Breitstreckwalzen 9 angeordnet.

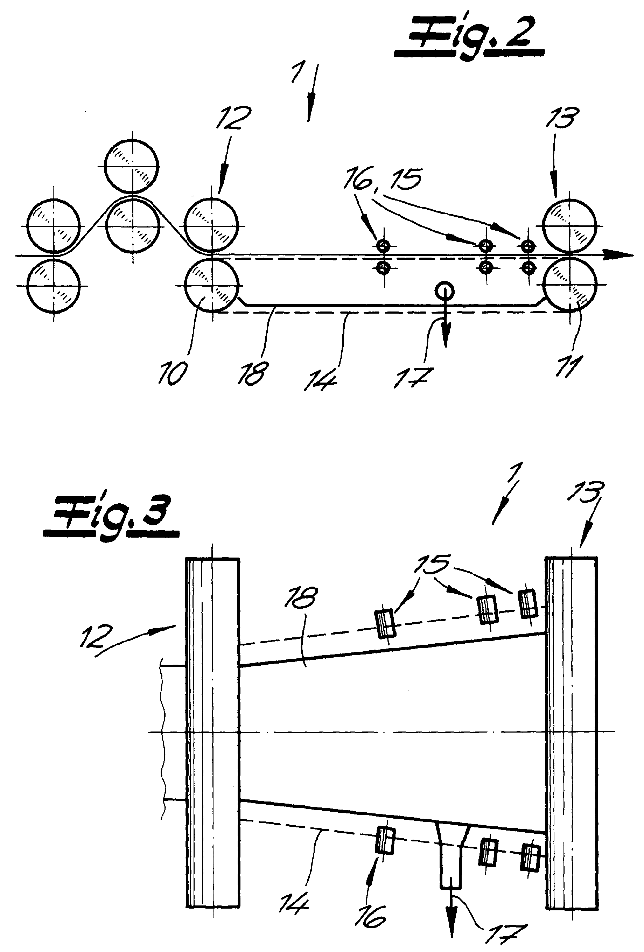

Das Querreckwerk 1 nach den Fig. 2 und 3 besteht aus einem um die beiden unteren Walzen 10, 11 zweier Hauptwalzenpaare 12, 13 endlos umlaufenden elastischen Band 14 mit einer gegenüber der Verbundbahn hohen Steifigkeit und zwischen den Hauptwalzenpaaren 12, 13 angeordneten, eine nach außen gerichtete Kraft auf das Band 14 ausübenden, schräg angestellten Nebenwalzenpaaren 15, 16. Die hohe Steifigkeit des elastischen Bandes 14 wirkt dabei Inhomogenitäten in der Laminatbahn entgegen. Das elastische Band 14 ist luftdurchlässig ausgeführt und zwischen den beiden unteren Walzen 10, 11 der beiden Hauptwalzenpaare 12, 13 ist eine an ein Sauggebläse 17 angeschlossene Vakuumwanne 18 angeordnet.

Eine Verbundbahn mit einer Folienbahn aus einer mit Kalziumkarbonat versetztem Polypropylen/Ethylen-Propylen-Dien-Mischpolymerisat bestehenden Kunststoffmischung wurde in Längsrichtung um 300 % gereckt. Die Wasserdampfdurchlässigkeit betrug 850 gr/cm²/24h. Anschließend wurde in Querrichtung nachgereckt, wobei bei einer bleibenden Verformung von 10 % sich eine Wasserdampfdurchlässigkeit von 1150 gr/m²/24h und bei 20 % bleibender Verformung von 1360 gr/m²/24h ergab.

Bei einer anderen Verbundbahn mit einer Folienbahn aus Polypropylen wurde um 350 % in Längsrichtung vorgereckt, wobei sich eine Wasserdampfdurchlässigkeit von 255 gr/m²/24h ergab. Bei einer Nachreckung mit 20 % bleibender Verformung ergab sich eine Wasserdampfdurchlässigkeit von 650 gr/m²/24h.

Alle zuvor angegebenen Messwerte der Wasserdampfdurchlässigkeit wurden bei 23 °C und mit 90 % Luftfeuchtedifferenz gemessen. Sofern nicht ausdrücklich ausgeführt, handelt es sich bei den angegebenen Reckwerten um die Reckwerte, die nach Reckung und Relaxation bleiben.

## Patentansprüche

1. Verfahren zum Herstellen einer wasserdampfdurchlässigen Laminatbahn, wobei eine Folienbahn aus mit einem Füllstoff versetztem thermoplastischen Kunststoff und eine Nonwoven-Vliesbahn aus Kunststoff-Filamenten und/oder Kunststoff-Fasern miteinander in Verbund gebracht werden und die so gebildete Verbundbahn in Längs- und Querrichtung zur Laminatbahn gereckt wird, **dadurch gekennzeichnet, dass** die Verbundbahn zunächst um mehr als 200 % in Längsrichtung und anschließend um nicht mehr als 50 % auch in Querrichtung gereckt wird.

2. Verfahren nach Anspruch 1, **dadurch gekennzeichnet, dass** mit einer Folienbahn auf Basis Polyolefin gearbeitet wird.

3. Verfahren nach Anspruch 2, **dadurch gekennzeichnet, dass** mit einer Folienbahn auf Basis Polypropylen oder Polyethylen gearbeitet wird.

4. Verfahren nach Anspruch 3, **dadurch gekennzeichnet, dass** mit einer Folienbahn auf Basis Polypropylen oder Polyethylen gearbeitet wird, die einen Anteil Ethylen-Vinylalkohol-Copolymer und/oder Ethylen-Propylen-Dien-Mischpolymerisat aufweist.

5. Verfahren nach einem der Ansprüche 1 bis 4, **dadurch gekennzeichnet, dass** mit einer Folienbahn gearbeitet wird, die den Füllstoff bezogen auf den thermoplastischen Kunststoff in Mengen von 30 bis 70 Gew.-% enthält.

6. Verfahren nach Anspruch 5, **dadurch gekennzeichnet, dass** mit einer Folienbahn gearbeitet wird, die den Füllstoff bezogen auf den thermoplastischen Kunststoff in Mengen bis 60 Gew.-% enthält.

7. Verfahren nach einem der Ansprüche 1 bis 6, **dadurch gekennzeichnet, dass** mit einer Folienbahn gearbeitet wird, die Kalziumkarbonat als Füllstoff enthält.

8. Verfahren nach einem der Ansprüche 1 bis 7, **dadurch gekennzeichnet, dass** mit einer Folienbahn gearbeitet wird, die den Füllstoff in einer Korngröße von 1 bis 10 *µ*m enthält.

9. Verfahren nach einem der Ansprüche 1 bis 8, **dadurch gekennzeichnet, dass** die Verbundbahn bei erhöhter Temperatur in Längs- und Querrichtung gereckt wird.

10. Verfahren nach Anspruch 9, **dadurch gekennzeichnet, dass** die Verbundbahn bei einer Temperatur von 80 bis 150 °C in Längs- und Querrichtung gereckt wird.

11. Verfahren nach einem der Ansprüche 1 bis 10, **dadurch gekennzeichnet, dass** die Verbundbahn um 250 bis 450 % in Längsrichtung gereckt wird.

12. Verfahren nach einem der Ansprüche 1 bis 11, **dadurch gekennzeichnet, dass** die Verbundbahn um 20 bis 30 % in Querrichtung gereckt wird.

13. Anlage zur Durchführung des Verfahrens nach einem der Ansprüche 1 bis 12, mit einem Längsreckwerk und einem Querreckwerk, **dadurch gekennzeichnet, dass** das Querreckwerk (1) aus einem Gatter von Bananen-Breitstreckwalzen (2) besteht.

14. Anlage nach Anspruch 13, **gekennzeichnet durch** ein unteres und/oder oberes, über die äußeren Breitstreckwalzen (3,4;5,6) endlos umlaufendes elastisches Band (7;8).

15. Anlage zur Durchführung des Verfahrens nach einem der Ansprüche 1 bis 12, mit einem Längsreckwerk und einem Querreckwerk, **dadurch gekennzeichnet, dass** das Querreckwerk aus einem um die beiden unteren Walzen (10, 11) zweier Hauptwalzenpaare (12, 13) endlos umlaufenden elastischen Band (14) mit einer gegenüber der Verbundbahn hohen Steifigkeit und zwischen den Hauptwalzenpaaren angeordneten, eine nach außen gerichtete Kraft auf das Band ausübenden, schräg angestellten Nebenwalzenpaaren (15, 16) besteht.

16. Anlage nach Anspruch 15, **dadurch gekennzeichnet, dass** das elastische Band (14) luftdurchlässig ausgeführt ist und zwischen den beiden unteren Walzen (10, 11) der beiden Hauptwalzenpaare (12, 13) eine an ein Sauggebläse (17) angeschlossene Vakuumwanne (18) angeordnet ist.
